# EUROPEAN PATENT APPLICATION

(11) **EP 4 496 047 A1**
(43) Date of publication of application: **22.01.2025**
(21) Application number: 23916599.6
(22) Date of filing: 23.10.2023
(51) Int. Cl.: H01M 8/0258, H01M 4/88, H01M 8/1004

(54) **INTEGRATED GAS DIFFUSION LAYER FOR FUEL CELL, AND PREPARATION METHOD THEREFOR AND USE THEREOF**

(30) Priority: 09.06.2023 CN 202310684663
(71) Applicant: Suzhou Institute of Nano-Tech and Nano-Bionics (SINANO), Chinese Academy of Sciences, Suzhou, Jiangsu 215123 (CN)
(72) Inventor: ZHOU, Xiaochun, Suzhou, Jiangsu 215123 (CN); HE, Can, Suzhou, Jiangsu 215123 (CN)
(74) Representative: Bayramoglu et al.
(86) International application number: PCT/CN2023/126019
(87) International publication number: WO 2024/250517

(57) **Abstract**

The present application provides an integrated gas diffusion layer for a fuel cell, and a preparation method and use thereof. In the integrated gas diffusion layer, a flow field plate and a gas diffusion layer are integrated into an integral structure, including processing a surface of the gas diffusion layer by etching or pressing to form a flow field structure with a flow channel and a rib, so that the surface of the gas diffusion layer also has the function of a flow field, thereby forming the integrated gas diffusion layer. By adopting the technical solution of the present application, the structure having the flow channel with high porosity and the microchannel rib is engraved on the surface of the existing gas diffusion layer by methods such as lase engraving, machining, mechanical pressing and the like, to realize integration of the flow field plate and the gas diffusion layer. This method is rapid, simple to operate, and low in processing cost; and the prepared integrated gas diffusion layer has good water management capability, and gas can be transferred to the catalytic layer more quickly, so that the cell has higher cell performance.

## Description

The present application is based on and claims the priority of Chinese patent application No. 202310684663.9 filed on Jun 9, 2023 and entitled "INTEGRATED GAS DIFFUSION LAYER FOR FUEL CELL, AND PREPARATION METHOD AND USE THEREOF".

### TECHNICAL FIELD

The present application relates to the technical field of energy and cleaning, and in particular to an integrated gas diffusion layer for a fuel cell, and a preparation method and use thereof.

### BACKGROUND TECHNOLOGY

As a carbon-free energy medium, hydrogen has been widely used in a fuel cell. The fuel cell can convert hydrogen into electric energy, and has the characteristics of high efficiency, no pollution and fast start-up. A proton exchange membrane fuel cell (PEMFC) has high energy output and normal-temperature start-up capability. The PEMFC is considered as one of the most promising fuel cells because of its high efficiency, pollution-free products, being capable of operating at low temperature, and the like characteristics, and has been commercially applied in fuel cell vehicles and stationary fuel cells.

However, the market demand for new energy products determines that the development goal of fuel cells is a smaller volume or mass, a lower manufacturing cost and higher output power. However, the fuel cell in the prior art is mainly composed of a bipolar plate, a gas diffusion layer, a microporous layer, a catalytic layer, and a proton exchange membrane, where the gas diffusion layer functions to transport reactants and products, and thus plays an irreplaceable role in the fuel cell. The gas diffusion layer is one of core components of the proton exchange membrane fuel cell, and its main functions in the fuel cell include (1) supporting the catalytic layer; (2) transporting the reaction gas to the catalytic layer for electrochemical reaction; and (3) discharging excess water to the outside of the cell.

Currently, there is not much difference in structure of fuel cells of different models or provided by different manufacturers in the prior art, wherein the weight of the bipolar plate accounts for more than 80% of the fuel cell. Therefore, it is necessary to reduce the mass of the fuel cell, depending on whether the mass of the bipolar plate can be further reduced, thereby promoting the promotion in light weight and large-scale application of the fuel cells. Moreover, the bipolar plate and the gas diffusion layer occupy most of the volume of the fuel cell, and manufacturing costs of both of them account for more than 30% of the fuel cell, so as to further reduce the volumes and manufacturing costs of the bipolar plate and the gas diffusion layer, which can not only further improve the power density of the fuel cell, but also reduce the volume and quality of the fuel cell, thereby promoting the commercial application of the fuel cell.

However, the existing fuel cell transmits the reactants and products of the fuel cell through the collocated use of the bipolar plate and the gas diffusion layer. The bipolar plate provides gas distribution, drainage and current collection, and the gas diffusion layer is used for providing gas reaction channels and water transmission paths. The problems of this collocated use of the structures are: (1) the bipolar plate has a relatively heavy mass and relatively complicated production process, which restricts the improvement of the production cost and power density of the fuel cell; (2) secondly, the contact site of the bipolar plate with the gas diffusion layer easily restricts the gas mass transfer behavior to form a weak mass transfer region of gas mass transfer, which is not conducive to the gas diffusion to the catalytic layer, thereby restricting the performance of the catalytic layer; and (3) the contact site of the bipolar plate with the gas diffusion layer is prone to water accumulation, which hinders the transmission of gas to the gas diffusion layer, and is not conducive to the transmission of reaction gas, thereby further reducing the performance of the fuel cell.

On the other hand, not only a traditional fuel cell structure faces the problems of low specific power, high manufacturing cost and the like, but also the gas transmission and water flooding in the cell are the factors that restrict the relatively lower power density of the fuel cell. Meanwhile, in order to improve the power density of the fuel cell, the structures of the flow field plate and the gas diffusion layer need to be further improved.

J. Electrochem. Soc. 2019, 166, 3210-3215 discloses a gas diffusion layer with flow channel structure prepared by molding method, and the collector plate is a planar metal plate, which realizes the improvement of fuel cell power density.

J. Power Sources. 2021, 515, 230636-230644 discloses a porous gas diffusion layer with a flow channel structure prepared by a method utilizing 3D printing, which can be used for fuel cell assembly after high-temperature carbonization. Although 3D printing technology is simpler and more convenient than compression molding technology, it does not play an obvious role in improving cell performance.

Obviously, the prior art has not been able to achieve a technical solution in which the fuel cell has both a simple structure and high power density.

In view of this, the present application provides an integrated gas diffusion layer, which integrates a flow channel on the gas diffusion layer to prepare an integrated gas diffusion layer with a special flow channel structure and a microchannel rib. A bipolar plate with a flow field only needs to be replaced by a flat metal plate or a graphite plate. Such a structure can not only reduce the volume of an electrochemical energy conversion device, improve the power density and increase the specific power, but also greatly reduce the volume of the fuel cell, while ensuring that the fuel cell has excellent gas transmission performance and water transmission performance.

### CONTENT OF THE INVENTION

In view of this, in order to solve the aforementioned problems, the present application provides an integrated gas diffusion layer for a fuel cell, and a preparation method and use thereof, which can quickly realize the preparation of an integrated gas diffusion layer with a special flow channel structure and a microchannel rib by a simple process. The integrated gas diffusion layer can simultaneously play the dual roles of the diffusion layer and the flow field, greatly reducing the mass/volume of an electrochemical energy conversion device requiring gas to participate in a reaction, and improving the power density, specific power and performance stability.

In order to achieve the aforementioned objective, the present application provides an integrated gas diffusion layer for a fuel cell, which integrates a flow field plate and a gas diffusion layer into an integral structure, including: etching or pressing a surface of the gas diffusion layer to form a flow field structure with a flow channel and a rib, so that the surface of the gas diffusion layer also has the function of a flow field, and thus the integrated gas diffusion layer is formed.

Preferably, the flow field structure includes a flow channel with a porous structure, and a microchannel rib.

Preferably, the flow field structure is formed by etching a surface layer of the gas diffusion layer through engraving or machining to form a flow field having the flow channel with the porous structure and the microchannel rib. A bottom layer of the gas diffusion layer is not etched, and the structure of the gas diffusion layer is retained, so that the gas diffusion layer and the flow field are integrated into an integral structure to form the integrated gas diffusion layer which has dual functions of the gas diffusion layer and the flow field.

Preferably, the etching treatment method includes laser engraving.

Preferably, the pressing treatment method includes any one of machining or mechanical pressing.

Preferably, the flow channel structure includes any one of a serpentine flow field, an interdigitated flow field, and a parallel flow field.

Preferably, in the flow field structure, the microchannel rib has a thickness of 370 µm and a width of 1 mm; and the flow channel has a depth of 200 µm and a width of 1 mm.

Preferably, the material of the gas diffusion layer includes Toray carbon fiber carbon paper.

To achieve another objective, the present application further provides a method for preparing the aforementioned integrated gas diffusion layer for a fuel cell, which includes:
designing different types of flow channel structures by software, introducing the designed flow channel structures into a laser engraving machine or machining apparatus, and carrying out laser engraving on carbon paper or pressing carbon paper by the machining apparatus to obtain an integrated gas diffusion layer with the flow channel structure; or preparing a mold with the flow channel structure by adopting a 3D printing method, and placing carbon paper on the carbon paper for pressing to obtain an integrated gas diffusion layer with the flow channel structure.

Preferably, the integrated gas diffusion layer is prepared by a laser engraving machine, a milling machine or a tablet press.

Preferably, the software includes UG software.

Specifically, a commercial gas diffusion layer is selected, the gas diffusion layer is fixed on an adsorption platform, and the adsorption platform is placed in a cavity of a laser engraving machine; and different types of flow channel structures are designed by software, and a diagram of the designed flow channel structures is introduced into the laser engraving machine and prepared according to the designed flow field type to obtain different types of integrated gas diffusion layers.

Alternatively, the commercial carbon paper is placed in the platform, and the carbon paper is pressed by the milling machine according to the designed flow channel model.

Alternatively, a mold with parallel flow channels is first printed by a 3D printer, and then placed on the carbon paper for pressing.

The integrated gas diffusion layer prepared by the aforementioned technical solution is assembled with a planar metal plate or graphite plate to obtain a membrane electrode; and specifically, a membrane electrode assembly is assembled from an integrated GDL, including a cathode, an anode, a catalyst coating membrane, a bipolar plate and the integrated gas diffusion layer, and the aforementioned components are assembled to obtain the membrane electrode.

Preferably, the cathode is an integrated GDL prepared from TGP-120, the anode is an integrated GDL prepared from TGP-090, the catalyst is JMHISPEC9100 (55.5-58.5%), the Pt loadings of the anode and cathode are 0.24 mg cm⁻² and 0.48 mg cm⁻² respectively, and the bipolar plate is a planar metal plate or graphite plate.

The aforementioned components are encapsulated in a fuel cell case to assemble a fuel cell.

Under the condition of a back pressure of 0 kPa, the peak power density of the prepared fuel cell is ≥ 1.2 W/cm², and when the back pressure increases to 50 kPa, the peak power density of the fuel cell reaches 1.4 W/cm².

Obviously, the integrated gas diffusion layer provided by the present application can act as the diffusion layer and the flow field at the same time, which can greatly reduce the mass/volume of the electrochemical energy conversion device requiring gas to participate in the reaction, improve the power density, improve the stability, and achieve a substantial increase in specific power.

The beneficial technical effects obtained by the present application are as follows.
1. By adopting the technical solution of the present application, the structure having the flow channel with high porosity and the microchannel rib is engraved on the surface of the existing gas diffusion layer by methods such as lase engraving, machining, mechanical pressing and the like, to realize integration of the flow field plate and the gas diffusion layer. This method is rapid, simple to operate, and low in processing cost; and the prepared integrated gas diffusion layer has good water management capability, and gas can be transferred to the catalytic layer more quickly, so that the fuel cell has higher performance.
2. By adopting the technical solution of the present application, the flow field is integrated onto the surface of the diffusion layer to form an integrated structure, and the planar graphite plate or graphite plate is used as the bipolar plate to greatly reduce the thickness and quality of the fuel cell, which can not only reduce the volume of an electrochemical energy conversion device, improve the power density and increase the specific power, but also greatly reduce the volume of the fuel cell, while ensuring that the fuel cell has excellent gas transmission performance and water transmission performance.
3. By adopting the technical solution of the present application, the method has good universality, parameters such as the width of the flow channel and the type of the flow channel can be accurately set and adjusted by the software, the prepared flow channel has high porosity while the integrated gas diffusion layer is rapidly prepared, there are a large number of microchannels in the microchannel rib, so that the method has the advantages of a simple process, simple raw materials and low energy consumption, and is suitable for mass production and popularization.
4. The integrated gas diffusion layer prepared by adopting the technical solution of the present application does not need a traditional flow field plate during assembling of the fuel cell, but only needs a flat metal plate or graphite plate for assembling, and has excellent water management ability, and is suitable for the electrochemical energy conversion device requiring participation of gas or liquid.

### DESCRIPTION OF THE DRAWINGS

FIG. 1 is a flow chart of a process for preparing an integrated gas diffusion layer in Example 1 of the present application.
FIG. 2 is an SEM image of Toray carbon paper adopted in Example 1 of the present application without laser engraving.
FIG. 3a is a SEM image of a surface of the integrated gas diffusion layer prepared in Example 1 of the present application before and after laser engraving.
FIG. 3b is a SEM image of a front face of the integrated gas diffusion layer prepared in Comparative Example 1 of the present application.
FIG. 3c is a SEM image of a section of the integrated gas diffusion layer prepared in Example 1 of the present application.
FIG. 3d is a SEM image of a section of the integrated gas diffusion layer with a microchannel rib prepared in Example 1 of the present application.
FIG. 4a shows a drainage rate of the integrated gas diffusion layer and a traditional flow field prepared in Example 1 and Comparative Example 1 of the present application respectively under a gas flow of a stoichiometric ratio of 1.
FIG. 4b shows a drainage rate of the integrated gas diffusion layer and a traditional flow field prepared in Example 1 and Comparative Example 1 of the present application respectively under a gas flow of a stoichiometric ratio of 1.5.
FIG. 4c shows a drainage rate of the integrated gas diffusion layer and a traditional flow field prepared in Example 1 and Comparative Example 1 of the present application respectively under a gas flow of a stoichiometric ratio of 2.
FIG. 5a shows the fuel cell performance of the integrated gas diffusion layer prepared in Example 1 of the present application under different back pressures.
FIG. 5b shows the fuel cell performance of a commercial gas diffusion layer provided by Comparative Example 2 under different back pressures.
FIG. 5c shows a comparison of peak power densities of the integrated gas diffusion layer and the commercial gas diffusion layer provided in Example 1 and Comparative Example 2 of the present application under different back pressures.
FIG. 6 is a schematic structural diagram of a device for testing the drainage rate by adopting a drainage device.
FIG. 7 shows a mold with parallel flow channels printed by a 3D printer in Example 3 of the present application.
FIG. 8 shows an integrated gas diffusion layer with a parallel flow channel structure obtained by mechanical pressing with a 3D printed mold in Example 3 of the present application.

### DETAILED DESCRIPTION

In order to make the objectives, technical solutions and advantages of the embodiments of the present application clearer, the following clearly and completely describes the technical solutions in the embodiments of the present application with reference to the accompanying drawings in the embodiments of the present application, the described embodiments are a part rather than all of the embodiments of the present application.

The present application provides an integrated gas diffusion layer for a fuel cell, which integrates a flow field plate and a gas diffusion layer into an integral structure. A surface of the gas diffusion layer is etched or pressed to form a flow field structure with a flow channel and a rib, so that the surface of the diffusion layer also has the function of a flow field, and thus an integrated gas diffusion layer is formed.

Further, the flow channel has a porous structure; the rib has a microchannel structure; and the porous structure and the microchannel structure constitute the flow field structure.

Further, the flow field structure is obtained by etching a surface layer of the gas diffusion layer through engraving or machining. A bottom layer of the gas diffusion layer is not etched or pressed, and the structure of the gas diffusion layer is retained, so that the gas diffusion layer and the flow field are integrated into an integral structure to form the integrated gas diffusion layer which has dual functions of the gas diffusion layer and the flow field.

Preferably, carbon paper, or other materials that can achieve the same function as carbon paper and can form a flow field structure by etching or pressing, preferably Toray carbon fiber paper, can be selected as the material of the gas diffusion layer.

In some preferred embodiments, Toray TGP-120 or Toray TGP-090 is included, but is not limited thereto.

Specifically, a step for preparing the integrated gas diffusion layer includes:
fixing a commercial gas diffusion layer on a adsorption platform, and placing the adsorption platform in a cavity of a laser engraving machine. By using the laser engraving machine, integrated gas diffusion layers with different flow channel widths and different flow channel depths can be prepared. Flow fields with different flow channel widths and different types of flow fields, such as a serpentine flow field, an interdigitated flow field and a parallel flow field, can be designed by software.

Specifically, flow fields with different channel widths (0.1-2 mm) and different types of flow field structures, such as the serpentine flow field, the interdigitated flow field, the parallel flow field or the special shape flow field, etc. are designed by UG software. A diagram of the designed flow channel structures is introduced into a laser engraving machine, and laser engraving is carried out by using the laser engraving machine to prepare an integrated gas diffusion layer with different channel widths. The depth of the flow channel can be regulated by the etching times of the laser engraving machine (the depth is 200 µm).

The technical solution of the present application will be further explained in detail through specific examples hereafter, and the prepared gas diffusion layer is applied to the preparation of a fuel cell, and the performance of the fuel cell is tested.

### Example 1

In this example, a commercial gas diffusion layer was used as a raw material, and a surface of the commercial gas diffusion layer was subjected to laser engraving by utilizing a laser engraving machine to form flow fields with different flow channel widths and different types of flow fields.

Specifically, a step for preparing the integrated gas diffusion layer included:
fixing a commercial gas diffusion layer (carbon paper purchased from Toray, Japan, model: TGP-120) onto an adsorption platform, and placing the adsorption platform in a cavity of a laser engraving machine (EP-15-THG), where the intensity of laser engraving was changed by adjusting the current (5A) and engraving times (50 times) of the laser engraving machine, so as to adjust the parameters of the laser engraving flow field.

Different types of flow field structures with a flow channel width of 1 mm were designed by UG software, a diagram of the designed flow field structure was introduced into a laser engraving machine, and laser engraving was carried out by using the laser engraving machine, with etching times of 50 and an etching depth of 200 µm, so as to prepare an integrated gas diffusion layer with a serpentine flow field, an interdigitated flow field, a parallel flow field or a special shape flow field. Moreover, flow fields with different flow channel widths (0.1-2 mm) could be designed by UG software, and integrated gas diffusion layers with different flow channel widths and different flow channel depths could be obtained by adjusting etching times.

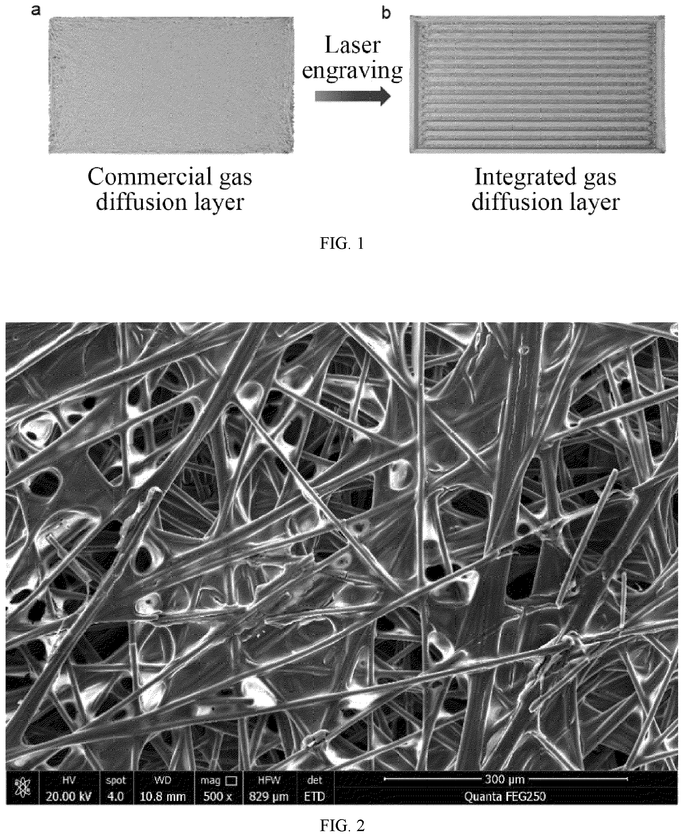

Referring to FIG. 1, it is a flow chart for preparing the parallel flow field provided by this example. A surface of the commercial gas diffusion layer was subjected to laser engraving by laser engraving technology, and flow fields with parallel flow channels could be obtained according to the parallel flow fields obtained from flow channel widths and depths preset by the software.

### Example 2

This example employed a machining method to prepare integrated carbon paper with a flow channel structure, which specifically included:
placing commercial carbon paper (TGP-120) onto a three-dimensional platform, and pressing the commercial carbon paper by a milling machine (Himile XK7113C) according to a designed flow channel model. The milling depth of the milling machine was set to 0.1 mm to obtain the integrated carbon paper with the flow channel structure.

### Example 3

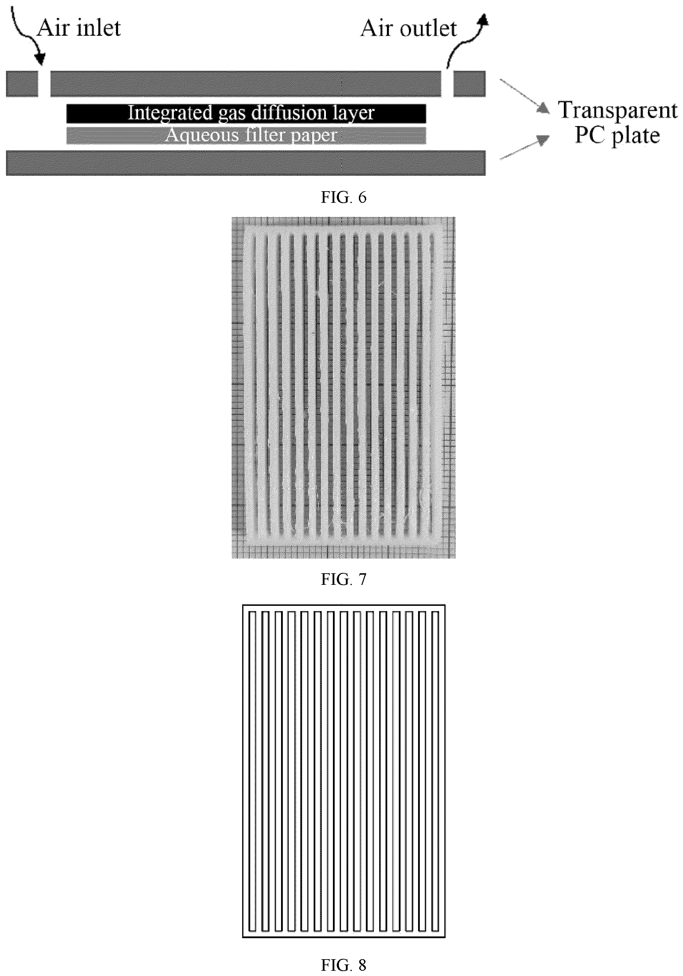

This example employed a mechanical pressing method to prepare integrated carbon paper with a flow channel structure, which specifically included: The designed flow channel structure was processed into a mold with the flow channel structure by 3D printing. Referring to FIG. 7, a mold with parallel flow channels having a flow channel width of 0.5 mm-2 mm printed by adopting a 3D printer is shown. Then carbon paper (TGP-120) was placed onto a tablet press (model: BL-6170-C-10T). The prepared mold was placed on the carbon paper and the carbon paper was pressed with a pressure of 1 MPa to obtain integrated carbon paper with the flow channel structure thereby obtaining a gas diffusion layer, as shown in FIG. 8.

### Comparative Example 1

The difference between this comparative example and Example 1 was that a traditional flow channel plate and a commercial gas diffusion layer were directly adopted to replace the integrated gas diffusion layer for cell assembling.

### Cell assembling:

The gas diffusion layers of the aforementioned examples and comparative examples were used for fuel cell assembling.

A method for preparing a membrane electrode assembly (MEA) included assembling from integrated GDLs. The cathode was an integrated GDL prepared from TGP-120. The anode was an integrated GDL prepared from TGP-090. The catalyst coating membrane (CCM) was available from Sinero Co., Ltd., Suzhou, China. The catalyst was JM Hispec 9100 (55.5-58.5%). The Pt loadings of the anode and the cathode were 0.24 mg cm⁻² and 0.48 mg cm⁻² respectively.

The bipolar plate was a planar graphite plate.

The membrane electrode assembly, a bipolar plate and a gas diffusion layer were encapsulated in a fuel cell case to assemble the fuel cell.

Performance test of gas diffusion layer and fuel cell:

### 1. Morphology of gas diffusion layer

The front face and section of the integrated gas diffusion layer were observed by a scanning electron microscope, to obtain the structure and morphology information of the integrated gas diffusion layer and observe the uniformity, continuity (scanning electron micrograph of the front face) and the flow field depth (scanning electron micrograph of the section) of the prepared flow field.

### 2. Test of water transmission capacity

The water transmission capacity played a key role in improving the performance of the cell. In the process of fuel cell operation, the discharge of water in the cell had a great influence on the performance of the cell. When the water generated in the fuel cell could not be discharged in time, the diffusion of gas to the diffusion layer through the flow channel would be greatly affected, and the fuel cell would show serious concentration polarization.

In the present application, the drainage capacities of the commercial gas diffusion layer and the integrated gas diffusion layer were compared by comparing the drainage times of the same mass of the commercial gas diffusion layer and the integrated gas diffusion layer.

In the present application, a self-made drainage device was used for testing the water transmission capacity. Referring to FIG. 6, which is a schematic structural diagram of the drainage device. A certain mass of water were added dropwise onto the filter paper to wet the filter paper. The integrated gas diffusion layer and the wetted filter paper were assembled, weighed and placed in a fixture for fixing. The fixture was assembled by two detachable and transparent PC plates, wherein the PC plate placed on the upper layer was provided with an air inlet and an air outlet. 1 L min⁻¹ of air was introduced from the air inlet, the mass was weighed and recorded once every 5 min, and a drainage rate plot was depicted.

The specific testing step included: (1) a gas diffusion layer with a size of 1 cm × 5 cm and filter paper containing 25 mg of water were fixed in a fixture, the device was connected, and the total mass of the device was weighed; (2) an air pump was turned on, so that a fixed flow rate of gas (1, 1.5 and 2 times of a theoretical gas flow rate) flowed out of the air pump, entered from a fixture inlet and flowed out from a fixture outlet, and the mass of the device was weighed every 5-20 min; and (3) at least 5 points were recorded in each group of experiments, and the plot was fitted to get a the water loss rate plot.

### 3. Method for testing fuel cell performance:

The performance of the fuel cell was tested by a fuel cell testing system. A polarization plot of the fuel cell was tested by linear voltammetry at the temperature of 80°C, the humidity of 80% and the pressure of 0-200 kPa, and a power plot of the cell was obtained by calculation. The flow rate of hydrogen was 0.5 L min⁻¹, and the flow rate of air was 2 L min⁻¹.

### Structure and performance characterization and analysis:

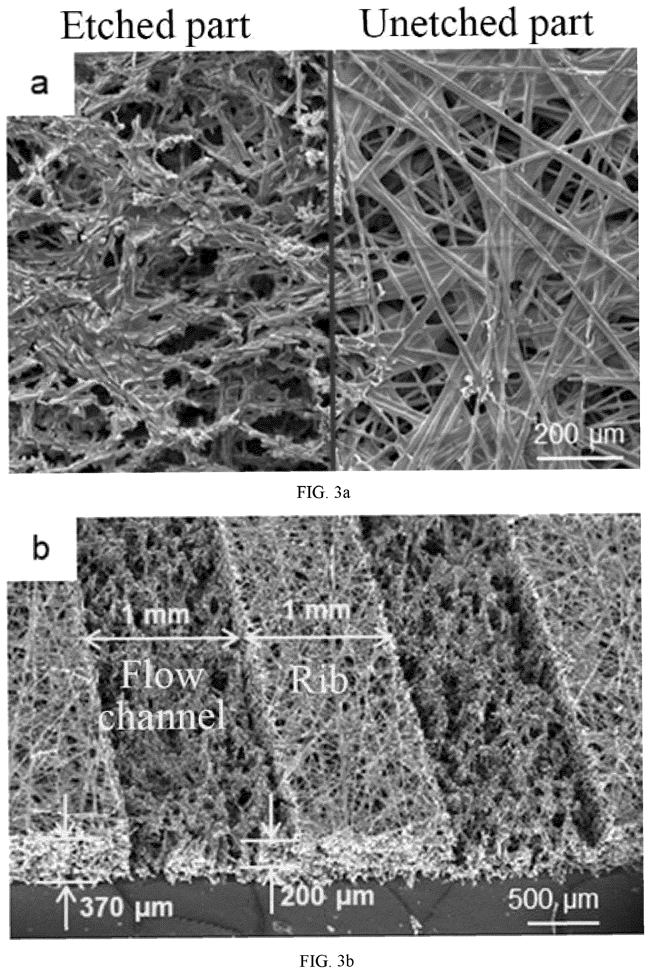

1. structural characterization: the front face and section of the integrated gas diffusion layer prepared in this example were observed by a scanning electron microscope to obtain the structure and morphology information of the integrated gas diffusion layer. The uniformity, continuity (scanning electron micrograph of the front face) and flow field depth (scanning electron micrograph of the section) of the prepared flow field were observed. See FIGS. 2 and 3a-3d for details.

Referring to FIG. 2, it is an SEM image of the purchased commercial carbon paper in Example 1 without laser engraving.

Referring to FIG. 3a, it showed an integrated gas diffusion layer prepared by laser engraving in Example 1. Referring to the SEM image after etching at the left side of a red line in the figure, the original structure of the etched gas diffusion layer was destroyed. Compared with the unetched part on the right side, the original pore channel structure still maintained on the right side played the role of the gas diffusion layer.

Referring to FIG. 3b, it showed that in the integrated gas diffusion layer of Example 1, the non-engraved part maintained the original morphology of the integrated gas diffusion layer, the engraved flow channel had more abundant porous structures and a clear flow channel structure, where as shown in the figure, the flow channel had a width of 1 mm and a depth of 200 µm, and the flow channel rib had a width of 1 mm and a thickness of 370 µm.

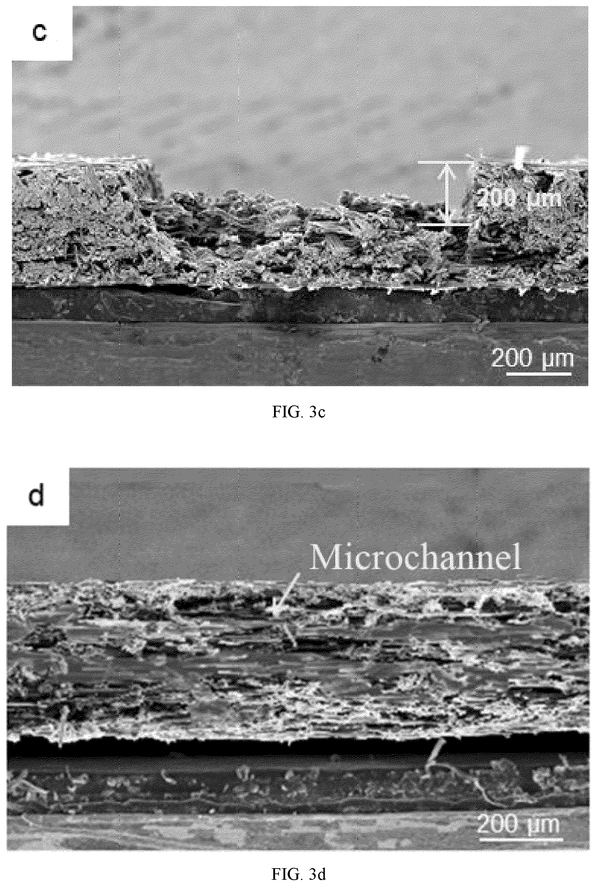

Referring to FIG. 3c, it could be further found that both the flow channels and ribs in the integrated gas diffusion layer had porous structures.

Referring to FIG. 3d, there were abundant microchannels in the ribs of the integrated gas diffusion layer.

### 2. Characterization of water transmission capacity

The water transmission capacity of the integrated gas diffusion layer prepared in this example was compared with that of the traditional flow field. Referring to FIGS. 3a-3b, they were comparison of the drainage rates of the integrated gas diffusion layer prepared in Example 1 and the traditional flow field under gas flow of different stoichiometric ratios. It could be seen from the figures that the drainage rate of the integrated gas diffusion layer was twice that of the traditional flow field under the gas flow of the same stoichiometric ratio, which showed that the integrated gas diffusion layer prepared in Example 1 had better water management capacity.

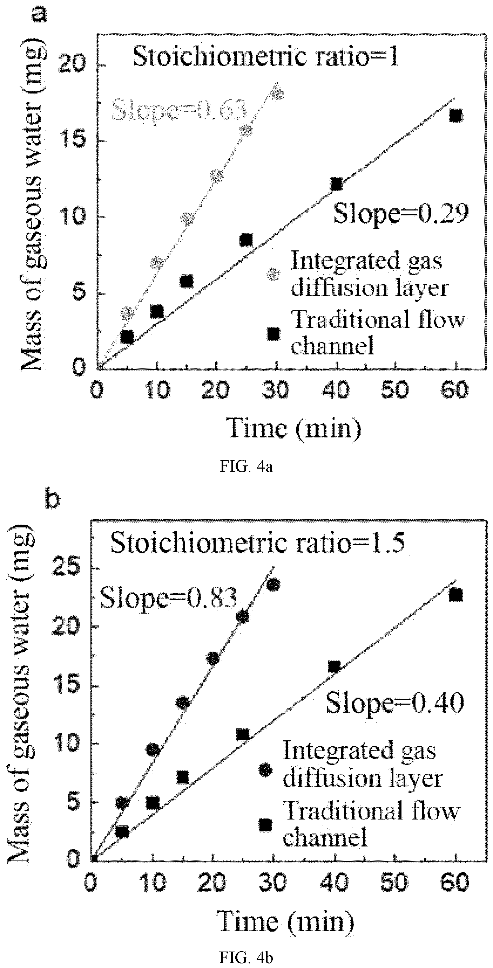

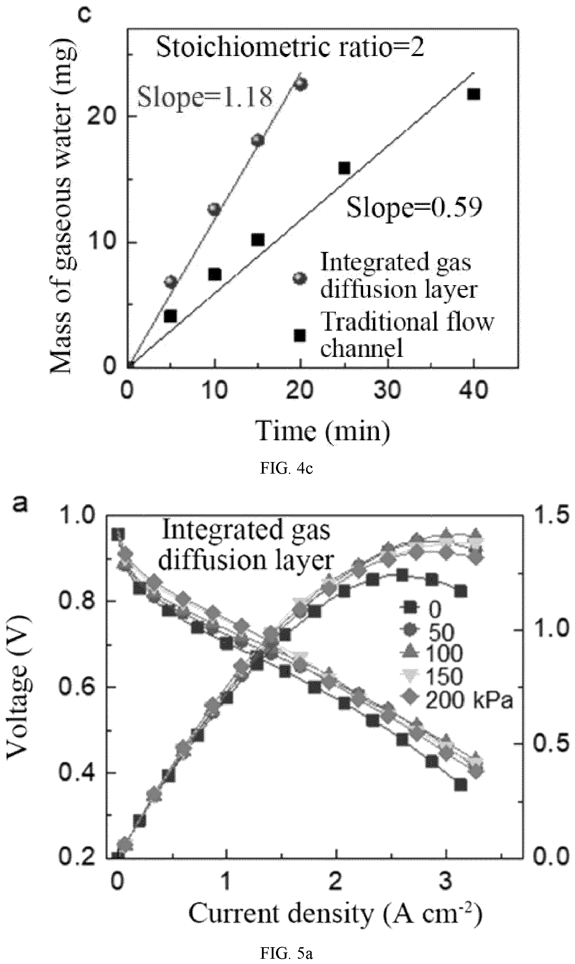

Specifically, as shown in FIG. 4a, when the amount of the introduced gas (gaseous water) was the same as the theoretical value, the drainage rate of the integrated gas diffusion layer was 2.17 times that of the traditional flow field. As shown in FIG. 4b, when the introduced gas was 1.5 times the theoretical value, the drainage rate of the integrated gas diffusion layer was 2.07 times that of the traditional flow field. As shown in FIG. 4c, when the introduced gas was twice the theoretical value, the drainage rate of the integrated gas diffusion layer was twice that of the traditional flow field. Obviously, increasing the gas flow could accelerate the drainage, but the integrated gas diffusion layer prepared by adopting Example 1 also had good drainage performance under low gas flow.

### 3. Characterization of cell performance

FIGS. 5a-5c were comparison diagrams of cell performance and maximum power density between the integrated gas diffusion layer prepared in Example 1 and the commercial gas diffusion layer under different back pressures.

Referring to FIG. 5a, it could be found through testing that the integrated gas diffusion layer also had good performance even under a back pressure of 0 kPa. When the back pressure was increased to 50 kPa, the cell performance could reach 1.4 W cm⁻², and there was no obvious increase in the cell performance when the back pressure was increased continually, which indicated that the integrated gas diffusion layer could achieve better fuel cell performance under a low back pressure.

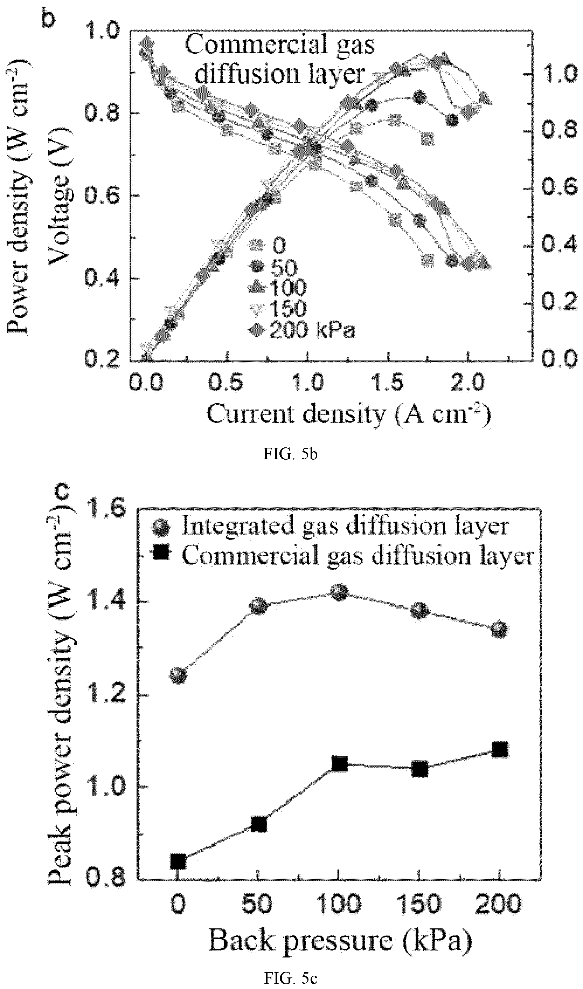

Referring to FIG. 5b, in the commercial gas diffusion layer, with the increase of the back pressure, the fuel cell performance gradually increased, but it was at a low level.

Referring to FIG. 5c, it showed comparison of the maximum peak power density between the integrated gas diffusion layer and the commercial gas diffusion layer. It could be seen from the figure that the integrated gas diffusion layer was obviously improved compared with the commercial gas diffusion layer under the same back pressure, with the maximum improvement of 0.47 W cm⁻².

In view of the above, by adopting the integrated gas diffusion layer prepared by the present application, which is prepared by laser engraving, machining, mechanical pressing and the like methods, the structure of the surface layer of the original commercial gas diffusion layer can be destroyed, and then the bottom structure is kept and continue to play the role of the gas diffusion layer in practical use; and a new pore channel structure is formed on the surface layer of the original gas diffusion layer by laser engraving, pressing or the like methods, to obtain actually needed flow channel structure according to the setting. Moreover, both the flow channel and the rib in the flow channel structure contain porous structures, and there are abundant microchannels in the rib, which can give full play to the role of the flow field plate, thereby realizing the dual functions of the gas diffusion layer and the flow field plate.

The above is only the preferred embodiments of the present application, which does not limit the protection scope of the present application. Various modifications and variations can be made to the present application by those skilled in the art. Any change, modification, substitution, integration and parameter change of these embodiments within the spirit and principle of the present application through conventional substitution or the ability to achieve the same function without departing from the principle and spirit of the present application are within the protection scope of the present application.

## Claims

1. An integrated gas diffusion layer for a fuel cell, wherein a flow field plate and a diffusion layer are integrated into an integral structure; a surface of the diffusion layer is etched or pressed to form a flow field structure with a flow channel and a rib, so that the surface of the diffusion layer also has the function of a flow field and forms the integrated gas diffusion layer.

2. The integrated gas diffusion layer for a fuel cell according to claim 1, wherein the flow channel has a porous structure; the rib has a microchannel structure; and the porous structure and the microchannel structure constitute the flow field structure;
the flow field structure is obtained by etching a surface layer of the gas diffusion layer through engraving or machining; a bottom layer of the gas diffusion layer is not etched or pressed, and the structure of the gas diffusion layer is retained, so that the gas diffusion layer and the flow field are integrated into an integral structure to form the integrated gas diffusion layer which has dual functions of the gas diffusion layer and the flow field.

3. The integrated gas diffusion layer for a fuel cell according to claim 2, wherein in the flow field structure, after the gas diffusion layer is etched or pressed, a flow channel structure is formed on the surface of the gas diffusion layer, and the non-etched part forms a rib of the flow channel;
wherein the thickness of the rib is the same as the thickness of the non-etched part of the gas diffusion layer; and/or
the thickness of the rib is ≤ 370 µm, and the width of the flow channel is 0.1-2 mm; and the flow channel formed by etching has a depth of 10-200 µm and a width of 0.1-2 mm.

4. The integrated gas diffusion layer for a fuel cell according to any one of claims 1-3, wherein
the etching treatment method comprises laser engraving; and/or
the pressing treatment method comprises any one of machining or mechanical pressing; and/or
the flow channel structure comprises any one of a serpentine flow field, an interdigitated flow field, and a parallel flow field.

5. The integrated gas diffusion layer for a fuel cell according to claim 4, wherein the material of the gas diffusion layer comprises Toray carbon fiber paper.

6. A method for preparing the integrated gas diffusion layer for a fuel cell according to any one of claims 1-5, comprising: designing different types of flow channel structures by software, introducing the designed flow channel structures into a laser engraving machine or machining apparatus, and carrying out laser engraving on carbon paper or pressing carbon paper by the machining apparatus to obtain an integrated gas diffusion layer with the flow channel structure; or preparing a mold with the flow channel structure by adopting a 3D printing method, and placing carbon paper on the carbon paper for pressing to obtain an integrated gas diffusion layer with the flow channel structure; and/or
wherein the integrated gas diffusion layer is prepared by a laser engraving machine, a milling machine or a tablet press; and/or
wherein the software comprises UG software.

7. A membrane electrode for a fuel cell, comprising the integrated gas diffusion layer according to any one of claims 1-5, wherein the membrane electrode is obtained by performing integrated GDL assembly on the integrated gas diffusion layer and a bipolar plate; and the bipolar plate is a planar metal plate or a graphite plate.

8. A fuel cell comprising the integrated gas diffusion layer according to any one of claims 1-5; or comprising the membrane electrode according to claim 7.

9. The fuel cell according to claim 8, wherein under the condition of a back pressure of 0 kPa, the peak power density of the prepared fuel cell is ≥ 1.2 W/cm², and when the back pressure increases to 50 kPa, the peak power density of the fuel cell reaches 1.4 W/cm².

10. Use of the integrated gas diffusion layer according to any one of claims 1-5 in an energy conversion device.
